# EUROPÄISCHE PATENTSCHRIFT

(11) **EP 1 026 914 B1**
(45) Veröffentlichungstag und Bekanntmachung des Hinweises auf die Patenterteilung: **02.06.2010**
(21) Anmeldenummer: 00100407.6
(22) Anmeldetag: 08.01.2000
(51) Int. Cl.: H04Q 11/04, H04Q 3/00, H04L 29/06

(54) **ISDN-Endgerät und Übertragungsnetzwerk**
ISDN terminal and transmission network
Terminal RNIS et réseau de transmission

(30) Priorität: 04.02.1999 DE 19904468
(43) Veröffentlichungstag der Anmeldung: 09.08.2000
(73) Patentinhaber: Tenovis GmbH & Co. KG, 60362 Frankfurt am Main (DE)
(72) Erfinder: Wagner, Joachim, 35625 Huettenberg (DE)
(74) Vertreter: Walkenhorst, Andreas

(56) Entgegenhaltungen:
- EP-A- 0 861 006
- US-A- 5 764 750
- US-B1- 6 577 724

## Beschreibung

Die vorliegende Erfindung betrifft ISDN-Endgeräte beliebiger Funktion, wie etwa Telefone, PC-Karten, Faxgeräte etc., sowie ein Übertragungsnetzwerk, an das derartige Endgeräte sowie ATM-Endgeräte anschließbar sind.

Für das Signalisierungsprotokoll von ATM-basierten Endgeräten sind Möglichkeiten der Kompatibilitätsabsprache vorgesehen. Dies bedeutet, daß ein Endgerät, das eine Verbindung anfordert, den angeforderten Dienst (zum Beispiel Sprachkommunikation, Bildtelefonie, Telefax, DFÜ, einschließlich aller erforderlichen Parameter) in der Verbindungsanforderung spezifiziert, so daß ein Empfänger-Endgerät zu überprüfen vermag, ob es den vom anfordernden Endgerät verlangten Dienst unterstützt oder nicht, und gegebenenfalls eine positive oder negative Rückmeldung absendet, oder einen alternativen Dienst anbietet.

Diese Absprachen geschehen vor und während des Verbindungsaufbaus. Endgeräte nach dem herkömmlichen ISDN-Standard (auch als Schmalband-ISDN oder N-ISDN bezeichnet) sind dafür nicht vorgesehen und können somit an den Kompatibilitätsabsprachen nicht teilnehmen. Derartige Endgeräte sind z.B. aus der EP-A-0861006 bekannt.

Die Folge davon ist, dass jedesmal, wenn ein ATM-Endgerät eine Verbindung mit einem ISDN-Endgerät verlangt, diese Verbindung über eine protokollwandelnde Interworking-Einheft hergestellt werden muss, um dann erst zu prüfen, ob eine Übertragung möglich ist oder ob diese an Inkompatibilitäten der vom ATM-Endgerät verlangten und der vom ISDN-Endgerät unterstützten Dienste scheitert. Wenn das Netzwerk ein öffentliches Fernsprechnetz ist, werden in einem solchen Fall jedes Mal Gebühren fällig, ausserdem wird jedesmal die Übertragungskapazität eines B-Kanals belegt.

### Vorteile der Erfindung

Mit der vorliegenden Erfindung wird ein ISDN-Endgerät beziehungsweise ein Übertragungsnetzwerk geschaffen, bei dem eine Überprüfung der Unterstützung eines bestimmten Dienstes durch ein ISDN-Endgerät möglich ist, ohne dass zu diesem Zweck eine physikalische Verbindung zu dem ISDN-Endgerät hergestellt werden muss.

Dies setzt zum einen seitens des ISDN-Endgerätes voraus, dass es eingerichtet ist, über eine Schnittstelle von einem ATM-Endgerät eine Anforderung zu empfangen, die einen von ihm verlangten Dienst spezifiziert, und diese mit einer Rückmeldung zu beantworten, die wenigstens angibt, ob es den verlangten Dienst unterstützt oder nicht. Zusätzlich kann die Rückmeldung, wenn der verlangte Dienst nicht unterstützt wird, eine Angabe Ober einen alternativen, von dem Endgerät unterstützten Dienst enthalten. Wenn zum Beispiel der verlangte Dienst Bildtelefonie ist, könnte die Rückmeldung die Angabe beinhalten, dass zwar nicht Bildtelefonie, aber Sprachübertragung unterstützt wird.

Auf Seiten des Übertragungsnetzwerks für die Übertragung von Daten zwischen wenigstens einem ISDN-Endgerät und wenigstens einem ATM-Endgerät sieht die Erfindung eine Interworking-Einheit vor, die in der Lage ist, einen von einem ATM-Endgerät kommenden Datenstrom in ein von einem ISDN-Endgerät verarbeitbares Protokoll umzusetzen und umgekehrt, die bei Empfang einer Verbindungsanforderung von dem ATM-Endgerät, wenn die Anforderung ein ISDN-Endgerät als Empfänger und einen verlangten Dienst spezifiziert, eine Kompatibilitätsprüfanforderung an das von der Verbindungsanforderung spezifizierte ISDN-Endgerät sendet und die angeforderte Verbindung herstellt, wenn sie eine Rückmeldung von dem ISDN-Endgerät erhält, die angibt, daß dieses den verlangten Dienst unterstützt. Ein solches Übertragungsnetzwerk ist für das ATM-Endgerät völlig transparent.

Falls das ISDN-Endgerät den verlangten Dienst nicht unterstützt, aber, wie oben beschrieben, einen alternativen Dienst anbietet, leitet das Übertragungsnetzwerk eine entsprechende Meldung zweckmäßigerweise an das ATM-Endgerät weiter, so daß dieses Endgerät oder ein Benutzer von diesem entscheiden kann, ob der alternativ angebotene Dienst in Anspruch genommen wird.

Wenn der vom ATM-Endgerät verlangte Dienst vom ISDN-Endgerät nicht unterstützt wird, und insbesondere wenn kein alternativer Dienst angeboten werden kann, weist die Interworking-Einheit die Verbindungsanforderung des ATM-Endgeräts ab.

Gemäß einer bevorzugten Ausgestaltung ist das Übertragungsnetzwerk beziehungsweise dessen Interworking-Einheit lernfähig. Zu diesem Zweck umfaßt sie eine Speichereinrichtung, in der Angaben über von an das Netzwerk angeschlossenen Endgeräten unterstützte Dienste speicherbar sind. Die Inhalte dieser Speichereinrichtung werden von der Interworking-Einheit selbsttätig anhand der von angeschlossenen ISDN-Endgeräten in Reaktion auf eine Kompatibilitätsprüfanforderung erhaltenen Rückmeldungen aktualisiert.

Die Interworking-Einheit sendet eine Kompatibilitätsprüfanforderung vorzugsweise nur dann, wenn in der Speichereinrichtung keine Angaben enthalten sind, ob das in einer Verbindungsanforderung spezifizierte ISDN-Endgerät den verlangten Dienst unterstützt oder nicht.

Auf diese Weise wird die Belastung des Übertragungsnetzwerks durch Signalisierungsverkehr gering gehalten.

Des weiteren ist zweckmäßig, wenn die Interworking-Einheit jeden Inhalt der Speichereinrichtung nach einer vorgegebenen Speicherdauer löscht. Dies hat zur Folge, daß an jeden Anschluß des Übertragungsnetzwerks von Zeit zu Zeit eine Kompatibilitätsprüfanforderung gesendet wird, die den Kompatibilitätszustand eines angeschlossenen Endgeräts ermittelt. Falls dieses Endgerät zwischen zwei solchen Anforderungen ausgetauscht worden ist, ergibt sich so eine automatische Aktualisierung des Inhalts der Speichereinrichtung, ohne daß das neu angeschlossene Endgerät mit seinen gegebenenfalls anderen Eigenschaften an einer zentralen Einrichtung des Übertragungsnetzwerks angemeldet werden muß.

Weitere Merkmale und Vorteile ergeben sich aus der nachfolgenden Beschreibung eines Ausführungsbeispiels.

### Figur

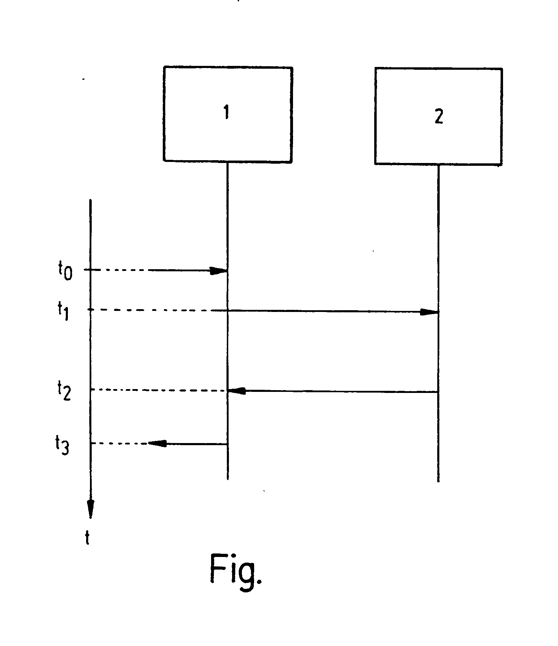

Die einzige Figur zeigt den Nachrichtenfluß zwischen einer Interworking-Einheit und einem Schmalband-ISDN-Endgerät in einem erfindungsgemäßen Übertragungsnetzwerk.

### Ausführungsbeispiel

Ein Übertragungsnetzwerk gemäß der Erfindung umfaßt eine Vielzahl von Anschlüssen, wobei an eine erste Gruppe dieser Anschlüsse ATM-Endgeräte und an eine zweite Gruppe Schmalband-ISDN-Endgeräte anschließbar sind. Wenn zwischen zwei Anschlüssen, die verschiedenen Gruppen angehören, eine Verbindung aufgebaut werden soll, muß diese über eine Interworking-Einheit verlaufen, die die Umsetzung eines ATM-Datenstroms in einen Datenstrom nach einem ISDN-Protokoll und zurück übernimmt.

Die erfindungsgemäße Interworking-Einheit 1 reagiert auf den Empfang einer Verbindungsanforderung von einem ATM-Endgerät zum Zeitpunkt t₀, die einen Anschluß der anderen Gruppe, also ein ISDN-Endgerät spezifiziert und einen Dienst wie etwa Bildtelefonie verlangt, indem sie eine Kompatibilitätsprüfanforderung an das ISDN-Endgerät 2 aussendet. (Zeit=t₁).

Das ISDN-Endgerät verarbeitet die Anforderung und liefert zum Zeitpunkt t₂ eine Rückmeldung an die Interworking-Einheit 1. Diese Rückmeldung kann verschiedene Inhalte haben: a) Das Endgerät 2 unterstützt nicht den verlangten Dienst. In diesem Fall sendet die Interworking-Einheit 1 zum Zeitpunkt t₃ eine Meldung an das anfordernde Endgerät, mit der dessen Verbindungswunsch abgewiesen wird. b) Der verlangte Dienst wird vom Endgerät 2 unterstützt. In diesem Fall meldet die Interworking-Einheit 1 zum Zeitpunkt t₃ an das anfordernde Endgerät, daß die angeforderte Verbindung zustande kommt, und eine physikalische Verbindung, auf der der verlangte Dienst ablaufen kann, wird bereitgestellt. c) Das Endgerät 2 unterstützt nicht den verlangten Dienst und bietet stattdessen einen alternativen Dienst an. Die Interworking-Einheit 1 meldet dessen Bezeichnung an das anfordernde Endgerät und erwartet dessen Entscheidung, ob die physikalische Verbindung für den angebotenen Dienst hergestellt werden soll oder nicht.

In allen drei Fällen wird das Ergebnis der vom Endgerät 2 gelieferten Rückmeldung in einer Speichereinrichtung der Interworking-Einheit 1 abgelegt. Wenn nun zu einem späteren Zeitpunkt erneut eine Anforderung von dem gleichen oder einem anderen ATM-Endgerät nach einer Verbindung für den gleichen Dienst mit dem ISDN-Endgerät 2 empfangen wird, sendet die Interworking-Einheit 1 nicht mehr eine Kompatibilitätsprüfanforderung an das Endgerät 2, sondern entnimmt dessen bereits bekannte Rückmeldung aus dem Inhalt der Speichereinrichtung und meldet sie dem ant ragenden Endgerät. Versehentliche Versuche von Benutzern des Übertragungsnetzwerks, Verbindungen zwischen inkompatiblen Endgeräten wie etwa Telefon einerseits und Faxgerät andererseits herzustellen, können auf diese Weise bereits auf dem Niveau der Interworking-Einheit erkannt und ohne Zeitverlust abgewiesen werden, ohne daß dafür Signalisierungskapazität des Netzwerks gebunden wird, und ohne daß eine - gegebenenfalls kostenpflichtige - physikalische Verbindung hergestellt werden muß.

Nach einer vorgegebenen Speicherdauer, die beispielsweise durch einen Systemadministrator nach Zweckmäßigkeitsgesichtspunkten festgelegt werden kann, wird ein Eintrag in der Speichereinrichtung der Interworking-Einheit 1 gelöscht. Dies hat zur Folge, daß bei einer Anforderung, eine Verbindung mit dem entsprechenden Endgerät 2 herzustellen, erneut eine Kompatibilitätsprüfanforderung an dieses gesendet werden muß, und daß die Interworking-Einheit 1 anhand der daraufhin erhaltenen Rückmeldung einen erneuten Eintrag in der Speichereinrichtung für das betreffende Endgerät erstellt. Falls das Endgerät zwischenzeitlich ausgetauscht worden ist, wird so sichergestellt, daß der ihm entsprechende Eintrag in der Speichereintrag jeweils auf aktuellem Stand ist.

Gemäß einer Variante der Erfindung kann vorgesehen werden, daß anstelle oder zusätzlich zu der turnusmäßigen Löschung der Einträge in der Speichereinrichtung diese auch auf eine Anforderung des entsprechenden Endgeräts hin aktualisiert werden können. Ein Endgerät kann eine solche Anforderung zum Beispiel jedesmal dann aussenden, wenn seine Netzstromversorgung eingeschaltet wird, so etwa nach Neuinbetriebnahme.

## Patentansprüche

1. ISDN-Endgerät (2) mit einer Schnittstelle zur Kommunikation mit einem Übertragungsnetzwerk, **dadurch gekennzeichnet, dass** es eingerichtet ist, eine über die Schnittstelle von einem ATM-Endgerät empfangene Anforderung, die einen von dem Endgerät (2) verlangten Dienst spezifiziert, mit einer Rückmeldung zu beantworten, die wenigstens angibt, ob das Endgerät den verlangten Dienst unterstützt oder nicht.

2. ISDN-Endgerät nach Anspruch 1, **dadurch gekennzeichnet, dass** die Rückmeldung, wenn das Endgerät den verlangten Dienst nicht unterstützt, einen alternantiven Dienst angibt, den das Endgerät unterstützt.

3. Übertragungsnetzwerk für die Übertragung von Daten zwischen wenigstens einem ISDN-Endgerät (2) und einem ATM-Endgerät, mit einer Interworking-Einheit (1), die in der Lage ist, einen von einem ATM-Endgerät kommenden Datenstrom in ein von einem ISDN-Endgerät verarbeitbares Protokoll umzusetzen und umgekehrt, **dadurch gekennzeichnet, dass** die Interworking-Einheit (1) derartig ausgebildet ist, so daß die bei Empfang einer Verbindungsanforderung von dem ATM-Endgerät, die ein ISDN-Endgerät (2) als Empfänger und einen verlangten Dienst spezifiziert, eine Kompatibilitätsprüfanforderung an das von der Verbindungsanforderung spezifizierte ISDN-Endgerät (2) sendet und die angeforderte Verbindung herstellt, wenn es eine Rückmeldung von dem ISDN-Endgerät (2) erhält, die angibt, daß das ISDN-Endgerät (2) den verlangten Dienst unterstützt.

4. Übertragungsnetzwerk nach Anspruch 3, **dadurch gekennzeichnet, daß** die Interworking-Einheit (1), wenn sie von dem ISDN-Endgerät (2) eine Rückmeldung erhält, die einen alternativen, von dem ISDN-Endgerät (2) unterstützten Dienst angibt, eine entsprechende Meldung an das ATM-Endgerät weiterleitet.

5. Übertragungsnetzwerk nach Anspruch 3 oder 4, **dadurch gekennzeichnet, daß** die Interworking-Einheit (1) eine Verbindungsanforderung eines ATM-Endgeräts abweist, wenn sie von dem ISDN-Endgerät (2) eine Rückmeldung erhält, die angibt, daß das ISDN-Endgerät den verlangten Dienst nicht unterstützt.

6. Übertragungsnetzwerk nach einem der Ansprüche 3 bis 5, **dadurch gekennzeichnet, daß** die Interworking-Einheit (1) eine Speichereinrichtung umfaßt, in der Angaben über von an das Netzwerk angeschlossenen Endgeräten unterstützte Diente speicherbar sind.

7. Übertragungsnetzwerk nach Anspruch 6, **dadurch gekennzeichnet, daß** die Interworking-Einheit (1) die Inhalte der Speichereinrichtung anhand der von angeschlossenen ISDN-Endgeräten erhaltenen Rückmeldungen aktualisiert.

8. Übertragungsnetzwerk nach Anspruch 6 oder 7, **dadurch gekennzeichnet, daß** die Interworking-Einheit (1) die Inhalte der Speichereinrichtung nach einer vorgegebenen Speicherdauer löscht.

9. Übertragungsnetzwerk nach einem der Ansprüche 6 bis 8, **dadurch gekennzeichnet, daß** die Interworking-Einheit (1) die Kompatibilitätsprüfanforderung nur dann sendet, wenn in der Speichereinrichtung keine Angaben darüber enthalten sind, ob das spezifizierte ISDN-Endgerät (2) den verlangten Dienst unterstützt oder nicht.

## Claims

1. ISDN terminal (2) comprising an interface for communicating with a transmission network, **characterised in that** it is equipped to respond to a request, which is received from an ATM terminal via the interface and which specifies a service required by the terminal (2), with a response message indicating at least whether or not the terminal supports the required service.

2. ISDN terminal according to claim 1, **characterised in that** the response message specifies an alternative service supported by the terminal if the terminal does not support the required service.

3. Transmission network for the transmission of data between at least one ISDN terminal (2) and an ATM terminal, comprising an interworking unit (1) which is able to convert a datastream originating from an ATM terminal into a protocol which can be processed by an ISDN terminal and vice versa, **characterised in that** the interworking unit (1) is configured in such a way that, when a connection request is received from an ATM terminal specifying an ISDN terminal (2) as the recipient and a required service, it transmits a compatibility test request to the ISDN terminal (2) specified in the connection request and produces the required connection if it receives a response message from the ISDN terminal (2) indicating that the ISDN terminal (2) supports the required service.

4. Transmission network according to claim 3, **characterised in that**, when the interworking unit (1) receives a response message from the ISDN terminal (2) specifying an alternative service supported by the ISDN terminal (2), said interworking unit sends an appropriate message to the ATM terminal.

5. Transmission network according to either claim 3 or claim 4, **characterised in that** the interworking unit (1) refuses a connection request from an ATM terminal if it receives a response message from the ISDN terminal (2) indicating that the ISDN terminal does not support the required service.

6. Transmission network according to any one of claims 3 to 5, **characterised in that** the interworking unit (1) comprises a storage means in which information on the services supported by the terminals connected to the network can be stored.

7. Transmission network according to claim 6, **characterised in that** the interworking unit (1) updates the contents of the storage means by using the response messages received from connected ISDN terminals.

8. Transmission network according to either claim 6 or claim 7, **characterised in that** the interworking unit (1) deletes the contents of the storage means after a predetermined storage period.

9. Transmission network according to any one of claims 6 to 8, **characterised in that** the interworking unit (1) only transmits the compatibility test request if the storage means does not contain any information on whether or not the specified ISDN terminal (2) supports the required service.

## Revendications

1. Terminal RNIS (2) avec une interface pour la communication avec un réseau de transmission, **caractérisé en ce qu'**il est équipé pour répondre, à une demande reçue via l'interface d'un terminal ATM et spécifiant un service demandé au terminal (2), par un signal de retour qui indique au moins si le terminal supporte ou non le service demandé.

2. Terminal RNIS selon la revendication 1, **caractérisé en ce que** le signal de retour, si le terminal ne supporte pas le service demandé, indique un service alternatif que le terminal supporte.

3. Réseau de transmission pour la transmission de données entre au moins un terminal RNIS (2) et un terminal ATM, avec une unité d'interfonctionnement (1) qui est en mesure de convertir un flux de données provenant d'un terminal ATM en un protocole pouvant être traité par un terminal RNIS et inversement, **caractérisé en ce que** l'unité d'interfonctionnement (1) est constituée de telle sorte que, lors de la réception d'une demande de liaison émanant du terminal ATM et spécifiant un terminal RNIS (2) en tant que récepteur et un service demandé, elle envoie une demande de contrôle de compatibilité au terminal RNIS (2) spécifié par la demande de liaison et établit la liaison demandée si elle obtient du terminal RNIS (2) un signal de retour qui indique que le terminal RNIS (2) supporte le service demandé.

4. Réseau de transmission selon la revendication 3, **caractérisé en ce que** l'unité d'interfonctionnement (1), si elle reçoit du terminal RNIS (2) un signal de retour qui indique un service alternatif supporté par le terminal RNIS (2), transmet un message correspondant au terminal ATM.

5. Réseau de transmission selon la revendication 3 ou 4, **caractérisé en ce que** l'unité d'interfonctionnement (1) refuse une demande de liaison d'un terminal ATM si elle reçoit du terminal RNIS (2) un signal de retour indiquant que le terminal RNIS ne supporte pas le service demandé.

6. Réseau de transmission selon l'une quelconque des revendications 3 à 5, **caractérisé en ce que** l'unité d'interfonctionnement (1) comprend un équipement de stockage dans lequel il est possible de stocker des indications sur des services supportés par des terminaux connectés au réseau.

7. Réseau de transmission selon la revendication 6, **caractérisé en ce que** l'unité d'interfonctionnement (1) actualise les contenus de l'équipement de stockage à l'aide des signaux de retour obtenus de terminaux RNIS connectés.

8. Réseau de transmission selon la revendication 6 ou 7, **caractérisé en ce que** l'unité d'interfonctionnement (1) efface, à l'issue d'une durée de stockage prédéfinie, les contenus de l'équipement de stockage.

9. Réseau de transmission selon l'une quelconque des revendications 6 à 8, **caractérisé en ce que** l'unité d'interfonctionnement (1) n'envoie la demande de contrôle compatibilité que si l'équipement de stockage ne contient aucune indication stipulant si le terminal RNIS (2) spécifié supporte ou non le service demandé.
